# EUROPEAN PATENT SPECIFICATION

(11) **EP 3 635 596 B1**
(45) Date of publication and mention of the grant of the patent: **01.06.2022**
(21) Application number: 18720813.7
(22) Date of filing: 28.03.2018
(51) Int. Cl.: G06F 21/10, H04N 21/4363, H04N 21/438, H04N 21/4408

(54) **SMOOTH TRANSITION FOR CONTENT TYPE CHANGES IN STREAMING CONTENT**
FLIESSENDER ÜBERGANG FÜR INHALTSÄNDERUNGEN IN STREAMING-INHALT
TRANSITION DOUCE POUR DES CHANGEMENTS DE TYPE DE CONTENU DANS UN CONTENU DE DIFFUSION EN CONTINU

(30) Priority: 08.06.2017 US 201715618108
(43) Date of publication of application: 15.04.2020
(73) Proprietor: Qualcomm Incorporated, San Diego, CA 92121 (US)
(72) Inventor: HONGAL, Shivaprasad, San Diego, California 92121 (US); GROVER, Ashish, San Diego, California 92121 (US); MANOHAR, Bollapragada, San Diego, California 92121 (US)
(74) Representative: Dunlop, Hugh Christopher
(86) International application number: PCT/US2018/024727
(87) International publication number: WO 2018/226296

(56) References cited:
- US-A1- 2014 115 110
- US-A1- 2015 020 088
- From Wikipedia: "High-bandwidth Digital Content Protection", , 24 April 2013 (2013-04-24), XP055478588, Retrieved from the Internet: URL:https://web.archive.org/web/2013042407 2832/https://en.wikipedia.org/wiki/High-ba ndwidth_Digital_Content_Protection [retrieved on 2018-05-25]

## Description

### BACKGROUND

Digital Content Protection schemes such as High-bandwidth Digital Content Protection (HDCP) prevents the copying of digital audio and video content while the content travels across connections between a transmitter and a receiver. HDCP can be used with various types of connects, such as DisplayPort (DP), Digital Visual Interface (DVI), and High-Definition Multimedia Interface (HDMI). HDCP protects digital content in several ways. First, authentication is used to prevent non-licensed devices from receiving protected content. Second, digital content transmitted from the transmitter to the receiver is encrypted to prevent eavesdropping and/or man-in-the middle attacks. Third, key revocation is utilized to prevent devices that have been compromised from receiving protected data.

"High-bandwidth Digital Content Protection" from Wikipedia, 24 April 2013 describes the uses and problems of HDCP. US2014/0115110 relates to transmitting mode packets prior to implementing a data transmission mode change. US2015/0020088 relates to reducing switching time between video sources in a video distribution network.

### SUMMARY

An example method for transmitting protected digital content from a transmitter to a receiver according to the disclosure includes determining whether the receiver is compliant with a version of a content protection protocol, sending, to the receiver, a content type indicator indicating that the digital content comprises a first content type regardless of whether the digital content actually comprises the first content type responsive to the receiver being compliant with the version of the content protection protocol, and transmitting the digital content to the receiver.

Implementations of such a transmitter can include one or more of the following features. The first content type can only be transmitted to the receiver that is compliant with the version of the content protection protocol. The content protection protocol is a High-bandwidth Digital Content Protection (HDCP) and the version comprises a version 2.2 of the HDCP protocol or higher. The receiver is non-compliant with the version of the content protection protocol, the method also including sending, to the receiver, a second content type indicator indicating whether the digital content comprises the first content type, monitoring whether a portion of the digital content to be transmitted comprises the first content type or a second content type, a third content type indicator indicating whether the portion of the digital content comprises the first content type or the second content type. The receiver is a repeater. The determining whether the receiver is compliant with the version of the content protection protocol includes receiving information from the receiver indicating whether the receiver and any downstream devices from the receiver are compliant with the version of the content protection protocol. The receiver or at least one downstream device is non-compliant with the version of the content protection protocol. The receiver and any downstream devices are compliant with the version of the content protection protocol, and the method includes sending the content type indicator to the receiver indicating that the digital content comprises the first content type regardless of whether the digital content actually comprises the first content type.

An example transmitter according to the disclosure includes means for determining whether a receiver is compliant with a version of a content protection protocol, means for sending, to the receiver, a content type indicator indicating that digital content comprises a first content type regardless of whether the digital content actually comprises the first content type responsive to the receiver being compliant with the version of the content protection protocol, and means for transmitting the digital content to the receiver.

Implementations of such a transmitter can include one or more of the following features. The first content type can only be transmitted to the receiver that is compliant with the version of the content protection protocol. The content protection protocol is a High-bandwidth Digital Content Protection (HDCP) and the version comprises a version 2.2 of the HDCP protocol or higher. The receiver is non-compliant with the version of the content protection protocol, and wherein the transmitter also includes means for sending a second content type indicator indicating whether the digital content comprises the first content type, means for monitoring whether a portion of the digital content to be transmitted comprises the first content type or a second content type, and means for sending, to the receiver, a third content type indicator indicating whether the portion of the digital content comprises the first content type or the second content type. The receiver is a repeater. The means for determining whether the receiver is compliant with the version of the content protection protocol includes means for receiving information from the receiver indicating whether the receiver and any downstream devices from the receiver are compliant with the version of the content protection protocol. The receiver or at least one downstream device is non-compliant with the version of the content protection protocol. The receiver and any downstream devices are compliant with the version of the content protection protocol, and wherein the means for sending the content type indicator to the receiver comprises means for sending the content type indicator indicating that the digital content comprises the first content type regardless of whether the digital content actually comprises the first content type.

An example transmitter according to the disclosure includes a communication interface, a memory, and a processor communicatively coupled to the memory and the communication interface. The processor is configured to determine whether a receiver is compliant with a version of a content protection protocol, send, to the receiver using the communication interface, a first content type regardless of whether the digital content actually comprises the first content type responsive to the receiver being compliant with the version of the content protection protocol, and transmit the digital content to the receiver using the communication interface.

Implementations of such transmitter can include one or more of the following features. The first content type can only be transmitted to the receiver that is compliant with the version of the content protection protocol. The content protection protocol is a High-bandwidth Digital Content Protection (HDCP) and the version comprises a version 2.2 of the HDCP protocol or higher. The receiver is non-compliant with the version of the content protection protocol, the wherein the processor is further configured to send a second content type indicator indicating whether the digital content comprises the first content type, monitor whether a portion of the digital content to be transmitted comprises the first content type or a second content type, and send, to the receiver, a third content type indicator indicating whether the portion of the digital content comprises the first content type or the second content type. The receiver is a repeater, and wherein the processor is configured to receive information from the receiver indicating whether the receiver and any downstream devices from the receiver are compliant with the version of the content protection protocol. The receiver or at least one downstream device is non-compliant with the version of the content protection protocol. The receiver and any downstream devices are compliant with the version of the content protection protocol, and the processor is configured to send the content type indicator to the receiver indicating that the digital content comprises the first content type regardless of whether the digital content actually comprises the first content type.

An example non-transitory, computer-readable medium according to the disclosure has stored therein computer-readable instructions for operating a transmitter. The instructions comprise instructions configured to cause the transmitter to determine whether a receiver is compliant with a version of a content protection protocol, send, to the receiver, a content type indicator indicating that the digital content comprises a first content type regardless of whether the digital content actually comprises the first content type responsive to the receiver being compliant with the version of the content protection protocol, and transmit the digital content to the receiver.

Implementations of such an non-transitory, computer-readable medium can include one or more of the following features. The first content type can only be transmitted to the receiver that is compliant with the version of the content protection protocol. The content protection protocol is a High-bandwidth Digital Content Protection (HDCP) and the version comprises a version 2.2 of the HDCP protocol or higher. The receiver is non-compliant with the version of the content protection protocol, and the instructions include instructions configured to cause the transmitter to send a second content type indicator indicating whether the digital content comprises the first content type, monitor whether a portion of the digital content to be transmitted comprises the first content type or a second content type, and send, to the receiver, a third content type indicator indicating whether the portion of the digital content comprises the first content type or the second content type. The receiver is a repeater, and the instructions further comprise instructions configured to cause the transmitter to receive information from the receiver indicating whether the receiver and any downstream devices from the receiver are compliant with the version of the content protection protocol. The receiver or at least one downstream device is non-compliant with the version of the content protection protocol. The receiver and any downstream devices are compliant with the version of the content protection protocol, and the instructions include instructions configured to cause the transmitter to send the content type indicator to the receiver indicating that the digital content comprises the first content type regardless of whether the digital content actually comprises the first content type..

### BRIEF DESCRIPTION OF THE DRAWINGS

**FIG. 1** is a schematic diagram of an example topography in which the techniques disclosed herein can be implemented.
**FIG. 2** is a block diagram of an example computing device that can be used to implement the transmitter, repeater, and/or the receiver illustrated in **FIG. 1****.**
**FIG. 3** is a flow chart of an example process for operating a transmitter according to the techniques disclosed herein.
**FIG. 4** is a flow chart of an example process for operating a transmitter according to the techniques disclosed herein.
**FIG. 5** is a flow chart of an example process for operating a transmitter according to the techniques disclosed herein.
**FIG. 6** is a flow chart of an example process for operating a transmitter according to the techniques disclosed herein.

Like reference symbols in the various drawings indicate like elements, in accordance with certain example implementations.

### DETAILED DESCRIPTION

Described herein are methods, systems, devices, computer readable media, and other implementations, for providing an improved user experience when streaming protected digital content. A situation that can negatively impact the user experience can occur when the transmitter switches between transmitting a first type of content to a second type of content, such as switching from transmitting premium content to non-premium content or vice versa. The transmitter can be configured to communicate a content type indicator to the receiver that identifies the type of digital content being transmitted to the receiver. However, the receiver may not receive this content type indicator prior to receiving the digital content in some instances. For example, the content type changes once the transmitter has begun transmitting digital content to the receiver. This mismatch can cause the receiver to be unable to decrypt or perform an integrity check the content and can cause the receiver to notify the transmitter that a link integrity error has occurred. The playback of the digital content at the receiver may then be interrupted for a short period of time while the transmitter and the receiver reauthenticate with one another. The techniques disclosed herein can be used to avoid this problem and to provide a better user experience in which playback of the digital content is not interrupted.

The techniques disclosed herein can be used with digital content protection schemes such as HDCP on various types of connections, including but not limited to HDCP version 2.2 on DisplayPort version 1.3. HDCP 2.2 on DisplayPort 1.3 utilizes a shared type value that serves as a content type indicator for the transmitter and the receiver or for the transmitter and the repeater where a repeater is utilized. The content type indicator is used to indicate whether the digital content being transmitted to the receiver or the repeater includes premium or non-premium content. Premium content may comprise content that is paid content or content that requires more or stronger protection than non-premium content. The content type indicator is determined by an Upstream Content Control Function. Audiovisual content flows from this Upstream Content Control Function into the transmitter, which in turn encrypts the digital content using HDCP encryption and transmits the encrypted content to the receiver or repeater downstream from the transmitter. The HCDP DisplayPort specification does not describe how to propagate a change in type from the transmitter to the downstream receiver or repeater once the HDCP encryption is active. The content type indicator is used by the HDCP encryption unit of the transmitter and the HDCP decryption unit of the receiver. The type information can be transmitted to the receiver out of band from the digital content being transmitted using HDCP. If the receiver has not been informed of the content type change prior to receiving the content in which a change of type has occurred, the receiver can decrypt the content using the wrong type value causing integrity check performed by the receiver to fail. The receiver can then inform the transmitter that a link integrity error has occurred, which can result in the transmitter and the receiver performing reauthentication. The reauthentication process is not instantaneous. During the time that this process is undertaken, the playback of the digital content stream by the receiver can be interrupted. The receiver may output a blank data stream during this time. The viewer may experience a blank or black screen on a display while the transmitter and receiver are reauthenticated and the digital content stream is restarted.

Link integrity checks are periodically performed by the receiver to ensure that cipher synchronization between the transmitter and the receiver is maintained. In HDCP 2.2 on DisplayPort 1.3, the transmitter encrypts a known bit pattern and sends this known bit pattern to the receiver. According to the HDCP 2.2 on DisplayPort 1.3 specification, the known bit pattern comprises a 16 bit pattern that is transmitted from the transmitter to the receiver one bit at a time. This pattern is referred to as the LINK_VERIFICATION_PATTERN and is transmitted as bit 5 of a vertical blank ID packet (VB-ID) transmitted when Single Stream Transport (SST) mode is being used. The LINK_VERIFICATION_PATTERN pattern is also transmitted when the multistream (MST) mode is being used. The receiver can be configured to decrypt the encrypted bit pattern received from the transmitter and to compare the decrypted value to an expected value. If a mismatch occurs more than a predetermined number of times, then the receiver can be configured to trigger a link integrity failure, which signals the transmitter to reauthenticate with the receiver. According to the HDCP 2.2 on DisplayPort 1.3 specification, this fixed pattern is checked four times per frame. If a mismatch occurs for two consecutive frames, the receiver is configured to trigger a link integrity failure. The specific examples for transmitting a link verification pattern, the frequency at which the receiver verifies the pattern, and the threshold for triggering a link integrity failure are examples and are not intended to limit the scope of the disclosure to these specific examples.

The following examples are example scenarios where a content type change may occur in HDCP on DP implementations:
- The start of playback of digital rights management (DRM) content premium content that requires HDCP 2.2 or higher (content type switches from 0 to 1);
- The end of playback of DRM premium content to non-premium content (content type switches from 1 to 0); and
- During DRM content playback, updated licensing information causes type to change from premium to non-premium content or vice versa (content type switches from 1 to 0 or from 0 to 1).
- The preceding example scenarios are not exhaustive and other scenarios may exist where content type changes may occur.

The techniques disclosed herein can be used to limit the number of times that the content type is switched by the transmitter to avoid situations where the content type is switched by the transmitter 105 and the content type indicator propagated by the transmitter 105 to the downstream devices is either received prior to or after content of that type reaching the downstream device(s). For example, the initialization vector (IV) used by the transmitter 105 when encrypting the content is dependent on the content type in HCDP on DP. In response to a content type change, the transmitter 105 can be configured to change one or more bits of the IV that represent the content type and utilize this IV when generating encrypted content. The transmitter 105 can also be configured to propagate the content type indicator to the downstream devices in response to this content change. By limiting the number of content changes, the number of times that such a content type indicator must be propagated to the downstream device(s) is reduced and as is the risk of this content type indicator arriving too early (before the encrypted content of that type reaches the downstream device(s)) or too late (after the encrypted content of that type reaches the downstream device(s)).

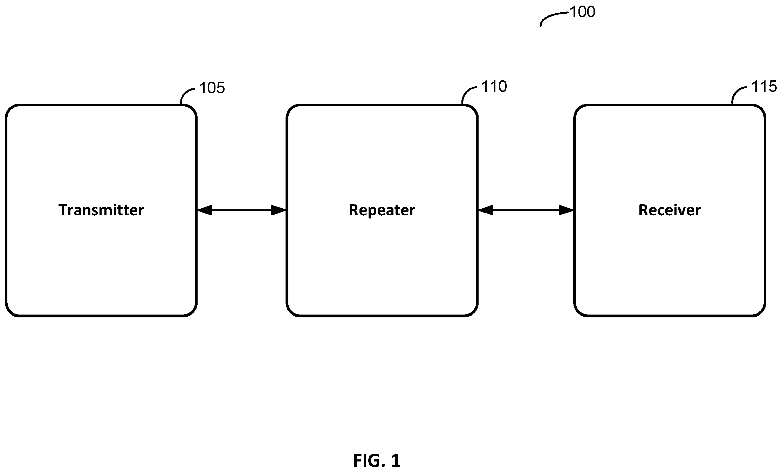

**FIG.** 1 is a schematic diagram of an example device topology 100 in which the techniques disclosed herein can be implemented. The example topography of FIG. 1 includes a transmitter 105, a repeater 110, and a receiver 115. The transmitter 105 is configured to transmit encrypted digital content to one or more downstream devices through a protected interface port. The downstream devices in this example implementation include a repeater 110 and a receiver 115. One or more repeaters may be disposed between the transmitter 105 and the receiver 115, and one or more receivers may be connected to the transmitter 105 or to a repeater 110. The inclusion of one or more repeaters is optional and the transmitter 105 can be communicatively coupled to the receiver 115. The receiver 115 is configured to receive, via a protected interface port, encrypted content transmitted by the transmitter 105 and to decrypt the received content. The receiver 115 can be integrated into a device capable of outputting audiovisual content, such as but not limited to a television, monitor, or a laptop or tablet computer. The repeater 110 is configured to receive encrypted content from the transmitter 105 or another repeater 110 upstream from the repeater 110. The repeater 110 is configured to decrypt the received encrypted content, decrypt the content, to reencrypt the content, and to transmit the reencrypted content to a downstream device via a protected interface port.

The transmitter 105, a repeater 110, and a receiver 115 may be configured to operate using different versions of a content protection protocol. For example, each of these devices may be configured to support HDCP 2.2 or higher on DisplayPort 1.3 or another particular version of a content protection protocol. However, one or more of these devices may not be capable of supporting a particular version of the content protection protocol. As a result, a content types that require a particular version or higher of the content protection protocol may not be transmitted to a device that does not support that particular version or higher of the content protection protocol. For example, in HDCP on DP, premium content can only be transmitted to a device that supports HDCP 2.2 or higher on DP. Other content protection protocols may have similar restrictions on which content types can be transmitted using a particular version or versions of the content protection protocol.

The receiver 115 can be configured to report to an upstream device (e.g., a repeater 110 or the transmitter 105) which version of the content protection protocol that the receiver 115 is capable of supporting. The repeater 110 can be configured to collect information from downstream devices, such as one or more the receivers and one or more repeaters (which may optionally be included in the topology) as to which version of the content protection protocol is supported by each of the devices and to send that information to the transmitter 105 or to an upstream repeater which can in turn forward this information further upstream to the transmitter 105. The transmitter 105 can be configured to use the downstream device information to determine whether a first content type that requires a particular version of the content protection protocol, such as HDCP 2.2 or higher (or another content protection protocol), to be supported in all devices in the topology in order to be transmitted can be transmitted. If one or more of the downstream devices do not support the particular version or higher of the content protection protocol required for a particular content type, the transmitter 105 can be configured to modify the digital content such that the digital content can be sent to the downstream devices that do not support the particular version of the content protection protocol. For example, the audio and/or video quality of the digital content can be decreased prior to transmitting the first content type where one or more of the downstream devices do not support the particular version of the content protection protocol. The transmitter 105 can also be configured to not transmit first content type content to devices not supporting the required version of the content protection protocol or to transmit blank content or content comprising a message indicating that a downstream device does not support the minimum version of content protection protocol required to receive the first content type.

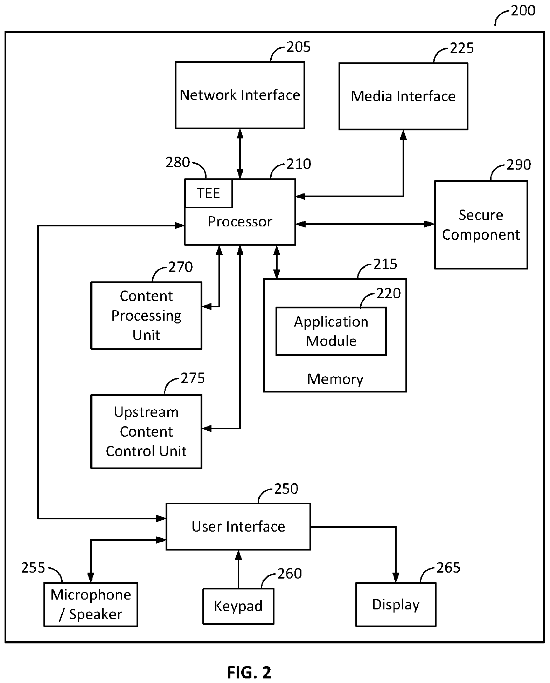

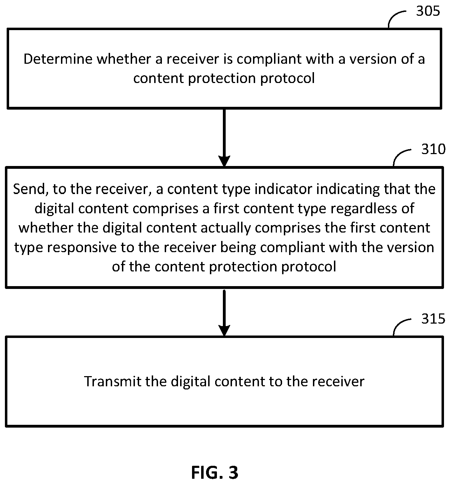

**FIG. 2** is a block diagram of an example computing device 200 that can be used to implement the transmitter 105, repeater 110, and/or the receiver 115 illustrated in **FIG. 1**. The computing device 200 can be used to implement, at least in part, the processes illustrated in **FIGS. 3****-7.** **FIG. 2** is a schematic diagram illustrating various components of an example computing device 200. For the sake of simplicity, the various features / components / functions illustrated in the schematic boxes of **FIG. 2** are connected together using a common bus to represent that these various features / components / functions are operatively coupled together. Other connections, mechanisms, features, functions, or the like, can be provided and adapted as necessary to operatively couple and configure a device capable of sending and/or receiving streaming content. The device may be a portable device, such as a smartphone, tablet or laptop computer, or may be a device that may be moveable but substantially is substantially stationary, such as a streaming digital video content player, a digital video media player (such as a BLURAY or other media player), or other such device. Furthermore, one or more of the features or functions illustrated in the example of **FIG. 2** can be further subdivided, or two or more of the features or functions illustrated in **FIG. 2** can be combined. Additionally, one or more of the features or functions illustrated in **FIG. 2** can be excluded.

As shown, the computing device 200 can include a network interface 205 that can be configured to provide wired and/or wireless network connectivity to the computing device 200. The network interface can include one or more local area network transceivers that can be connected to one or more antennas. The one or more local area network transceivers comprise suitable devices, circuits, hardware, and/or software for communicating with and/or detecting signals to/from one or more of the WLAN access points, and/or directly with other wireless devices within a network. The network interface 205 can also include, in some implementations, one or more wide area network transceiver(s) that can be connected to the one or more antennas. The wide area network transceiver can comprise suitable devices, circuits, hardware, and/or software for communicating with and/or detecting signals from one or more of, for example, the WWAN access points and/or directly with other wireless devices within a network. The network interface 205 is optional and may not be included in some implementations of the transmitter 105, repeater 110, and/or the receiver 115, which may not require network connectivity.

The computing device 200 can also include a media interface 225. The media interface 225 is a communication interface and can comprise one or more ports for receiving and/or transmitting digital content. The digital content can be encrypted and may be protected using one or more digital content protection protocols, such as HDCP. The media interface 225 can include one or more types of digital display interface that can be used to connect the computing device 200 to another computing device that is configured to transmit and/or receive digital content. The media interface 225 can include interface ports for one or more of DisplayPort (DP), Digital Visual Interface (DVI), and High-Definition Multimedia Interface (HDMI). The media interface 225 can also be configured to support other types of digital audiovisual interfaces in addition to or instead of one or more of the example types of digital audiovisual interface discussed herein.

The processor 210 can be connected to the network interface 205, the media interface 225 and/or other components of the computing device 200. The processor can include one or more microprocessors, microcontrollers, and/or digital signal processors that provide processing functions, as well as other calculation and control functionality. The processor 210 can be coupled to storage media (e.g., memory) 215 for storing data and software instructions for executing programmed functionality within the computing device 200. The memory 215 can be on-board the processor 210 (e.g., within the same IC package), and/or the memory can be external memory to the processor and functionally coupled over a data bus. The processor can also be coupled to a content processing unit 270 and/or an upstream content control unit 275. The content processing unit 270 and the upstream content control unit 275 can be implemented as software, hardware, or a combination thereof. The content processing unit 270 and/or the upstream content control unit 275 can be implemented one or more application specific integrated circuits (ASICs), programmable logic devices (PLDs), field programmable gate arrays (FPGAs), or other electronic units designed to perform the functions described herein, or a combination thereof. The content processing unit 270 and/or the upstream content control unit 275 can be implemented, at least in part, by processor executable program code. Such processorexecutable program code may be stored and/or executed by the trusted execution environment 280 or the secure component 290 described below.

The computing device 200 can include an upstream content control unit 275 where the computing device 200 is configured to function as a transmitter of digital content, such as the transmitter 105 of **FIG. 1**. Digital audiovisual content flows from the upstream content control unit 275 to the content processing unit 270, which is configured to encrypt the digital content according to a content protection protocol, including but not limited to HDCP, and to transmit the encrypted content to one or more downstream devices, such as the receiver 115 or the repeater 110 illustrated in **FIG. 1****.** The upstream content control unit 275 is configured to emit unencrypted digital audiovisual content that requires content protection while being communicated between the transmitter and the receiver and/or repeater. The upstream content control unit 275 can comprise hardware and/or executable software components (executable by the processor 210) which emit audiovisual content to be protected by the content protection protocol. The upstream content control unit 275 is configured to determine a content type of the digital content. For example, in HDCP on DP implementations, the upstream content control unit 275 is configured to determine whether the digital content is premium content or non-premium content and can notify the content processing unit 270. The type of content being provided by the upstream content control unit 275 included in a stream can change from premium to non-premium content or vice versa. The upstream content control unit 275 can be configured to receive updates to content licensing, which can prompt the upstream content control unit 275 to change the content type of the content being provided to the upstream content control unit 275.

The content processing unit 270 can be configured to encrypt digital content to be transmitted to a receiver or repeater, such as the receiver 115 or the repeater 110 illustrated in **FIG. 1****.** The content processing unit 270 can be configured to receive digital content from the upstream content control unit 275 as discussed above, and the content processing unit 270 can be configured to receive digital content from more than one upstream content control unit. The content processing unit 270 can be configured to encrypt and transmit the digital content according to the HDCP protocol and/or other content protection protocol. The content processing unit 270 can also be configured receive an indication of the type of content being received from the upstream content control unit 275. For example, the upstream content control unit 275 can be configured to provide an indication whether the digital content being provided to the content processing unit 270 comprises a first content type or a second content type, such as premium content or non-premium content in HDCP on DP implementations. The content processing unit 270 can also be configured to propagate a content type indicator to one or more downstream devices that identifies the type of content being transmitted to the downstream devices. The transmitter and the downstream devices can be configured to handle different types of content differently. For example, in HDCP on DP implementations, the transmitter and the downstream devices can be configured to handle premium and non-premium content differently. For example, where the content processing unit 270 is part of a transmitter or repeater, the content processing unit 270 may be configured to not transmit premium content to a downstream device that does not support at least a minimum version of the content protection protocol or may be configured to downgrade the quality of the content prior to transmission where one or more of the downstream devices do not support the particular version of the content protection protocol required for premium content.

The content processing unit 270 can also be configured to decrypt encrypted digital content received from an upstream device, such as the transmitter 105 or the repeater 110 of **FIG. 1****.** The content processing unit 270 can also be configured to perform integrity checks on the link between an upstream transmitter and computing device 200. For example, the content processing unit 270 of the transmitter can be configured to send an encrypted link verification pattern to the receiver. The content processing unit 270 of the receiver can be configured to decrypt the link verification pattern and compare the decrypted value to a reference value to determine whether the two values match. A mismatch can indicate that that cipher synchronization between the transmitter and the receiver has been lost. Cipher synchronization between the transmitter and the receiver may be lost when the content processing unit 270 of the transmitter has changed the type of content being transmitted (e.g. from premium content to non-premium content or vice versa), but the downstream devices do not receive an indication that the type of content has changed prior to receiving the new type of content.

The content processing unit 270 of the transmitter 105 can be configured to encrypt the content based at least in part on the type of content being encrypted. Thus, the encryption of the link verification pattern is dependent in part on the content type, and the receiver 115 or the repeater 110 attempting to decrypt the content will need to know the content type in order to property decrypt the encrypted content and the link verification pattern. For example, in implementations that utilize HDCP 2.2 on DP 1.3, the HDCP cipher consists of a 128-bit Advance Encryption Standard (AES) module configured to operate in the Counter (CTR) mode. The CTR mode cause the AES block cipher to operate as a stream cipher in which the digital content to be encrypted with a pseudorandom cipher digit stream referred to as a keystream. One input to the AES-CTR module is an initialization vector (IV). The value of the IV is based at least in part on the content type of the content to be transmitted. One or more bits of the IV vector can be set based on the type of content to be transmitted. Changing the IV value changes the output of the encryption module. A receiver 115 or repeater 110 attempting to decrypt the content will need to know the content type in order to be able to decrypt the encrypted content.

The content processing unit 270 of the transmitter 105 can be configured to send a content type indicator to downstream devices indicating that the transmitter is about to transmit a content of a new type, such as switching to from premium content to non-premium content or vice versa. However, a downstream device may not receive the content type indicator prior to receiving digital content of a type not expected by the receiver 115 or repeater 110, and the content processing unit 270 of the downstream device may attempt to decrypt the encrypted content using the IV value. Alternatively, the downstream device may receive the content type indicator prior to receiving the digital content of the type indicated by the content indicator, and the content processing unit 270 of the downstream device may attempt to decrypt the encrypted content using the wrong IV value. The content processing unit 270 of the downstream device can be configured to trigger a link integrity failure responsive to the link verification pattern included in the encrypted content not matching the expected reference value more than a predetermined number of times. The content processing unit 270 of the transmitter can be configured to use the processes illustrated in **FIGS. 3-6** to avoid triggering a link integrity failure due to a content type switch.

The transmitter 105 can be configured to propagate the content stream indicator to the receiver 115, the repeater 110, and any other downstream devices after authentication. Once authentication has been completed and transmission of the encrypted content has begun, the transmitter 105 can be configured to send a content type indicator to the downstream devices responsive to a change in content. However, the content type indicator may be sent using out of band techniques in which the content type indicator is not included in the encrypted content stream being transmitted by the transmitter 105. Accordingly, it is possible for the content type indicator to arrive either before or after content of the this content type arrives at the receiver 115 or the repeater 110. The HDCP 2.2 on DP 1.3 specification does not specifically address the propagation of the content type indicator to the receiver 115 or the repeater 110 after the transmission of the encrypted content stream has already commenced. However, the techniques disclosed herein address this situation and can be used to prevent interruption of the playback of the encrypted content resulting from a content type indicator being delayed in reaching the downstream devices.

A number of software modules and data tables can reside in memory 215 and can be utilized by the processor 210 in order to manage both communications with other devices, and/or perform the various digital content management processes disclosed herein. As illustrated in **FIG. 2**, in some embodiments, the memory 215 can include an application module 220 which can implement one or more applications. It is to be noted that the functionality of the modules and/or data structures can be combined, separated, and/or be structured in different ways depending upon the implementation of the computing device 200.

The application module 220 can be a process running on the processor 210 of the computing device 200, which can request information from the application module 220 or other data from one of the other modules of the computing device 200. Applications typically run within an upper layer of the software architectures and can be implemented in a rich execution environment of the computing device 200. The application module 220 can be configured to perform one or more of the processes disclosed herein. Furthermore, the application module 220 can be configured to be an upstream content control function that serves as a source of digital content similar to the upstream content control unit 275.

The processor 210 can include a trusted execution environment 280 and/or the computing device 200 may include a secure component 290. The trusted execution environment 280 and/or the secure component 290 can be used to implement at least a portion of the processes disclosed herein. The trusted execution environment 280 and/or the secure component 290 can be used to provide a secure computing environment for implementing the encryption and/or decryption of the digital content and for storage of encryption keys that can prevent an unauthorized party from tampering with and/or potentially circumventing the content protection protocols disclosed herein.

The trusted execution environment 280 can be implemented as a secure area of the processor 210 that can be used to process and store sensitive data. The trusted execution environment 280 can be configured to execute trusted applications that provide end-to-end security for sensitive data by enforcing confidentiality, integrity, and protection of the sensitive data stored therein. The trusted execution environment 280 can be used to store encryption keys, secure application program code, and/or other sensitive information.

The computing device 200 can include a secure component 290 (also referred to herein as a trusted component). The computing device can include the secure component 290 in addition to or instead of the trusted execution environment 280. The secure component 290 can comprise autonomous and tamper-resistant hardware that can be used for implementing the encryption and/or decryption of the digital content and for storage of encryption keys that can prevent an unauthorized party from tampering with and/or potentially circumventing the content protection protocols disclosed herein. The secure component 290 can be configured to store sensitive data and to provide confidentiality, integrity, and protection to the data stored therein. The secure component 290 can be used to store encryption keys, user data, and/or other sensitive data. The secure component 290 can be integrated with the hardware of the computing device in a permanent or semi-permanent fashion can be used to securely store data and/or provide a secure execution environment for applications.

The computing device 200 can further include a user interface 250 providing suitable interface systems, such as a microphone/speaker 255, a keypad 260, and a display 265 that allows user interaction with the computing device 200. The microphone/speaker 255. The keypad 260 can comprise suitable buttons for user input. The display 265 can include a suitable display, such as, for example, a backlit LCD display, and can further include a touch screen display for additional user input modes.

**FIG. 3** is a flow chart of an example process for operating a transmitter according to the techniques disclosed herein. The process illustrated in **FIG. 3** can be used to provide a user of the receiver with a better user experience by avoiding link integrity errors resulting from changes in content type of a digital content stream being received by the receiver before receiving notification of such a change in content type from the transmitter. The process illustrated in **FIG. 3** can be implemented by the transmitter 105 illustrated in **FIG. 1**. The content processing unit 270 of the transmitter 105 can provide the means for implementing the various stages of the process illustrated in **FIG. 3** unless otherwise specified.

A determination whether a receiver is compliant with a version of a content protection protocol can be made (stage 305). The version of the content protection protocol can represent a specific version of the content protection protocol or a minimum version of the content protection protocol that is receiver should be configured to support. The content processing unit 270 can be configured to receive receiver information from the receiver 115 via the receiver interface. If the receiver is a repeater, such as the repeater 110 illustrated in **FIG. 1**, the repeater provides receiver information for all downstream devices that are connected to the transmitter 105 via the receiver 115. Depending upon the topology of the particular implementation, the downstream devices can include multiple receivers and/or repeaters. The information received from the receiver(s) 115 and the repeater(s) 110 can include information that indicative of the a version of the content protection protocol supported by the downstream devices. The transmitter 105 can use this information to determine whether certain devices are permitted to access certain content. For example, if the transmitter 105 and the downstream devices implement HDCP 2.2 on DP 1.3, the downstream devices can be configured to provide an indication of the versions of HDCP which are supported by each of the downstream devices. According to the HDCP 2.2 on DP 1.3 specification, two content types may be transmitted: type 0 which is non-premium content, and type 1 which is premium content. The upstream content control unit 275 can indicate to the content processing unit 270 of the transmitter 105 that the digital content to be transmitted is premium content or non-premium content. Premium content requires a higher level of protection than non-premium content. Accordingly, the transmitter 105 and the repeater 110 can be configured such that premium content cannot be transmitted to HDCP 1.x compliant receivers or to HDCP 2.0 compliant repeaters. Premium content can be transmitted to receivers and repeaters supporting higher versions of the HDCP protocol, such as but not limited to HDCP 2.2. HDCP on DisplayPort is an example of one possible implementation. The techniques disclosed herein are not limited to these specific protocols or combination of protocols, and these examples are merely intended to illustrate the techniques disclosed herein. A particular content protection protocol can impose limitations on how different types of content stream are to be handled by the transmitter, receiver, and repeater. The content protection protocol can require that a particular version or higher of the content protection protocol be utilized for processing certain types of digital content.

A content type indicator can be sent to the receiver (stage 310). The content processing unit 270 of the receiver can be configured to send the content type indicator to the downstream devices via the media interface 225 or the network interface 205 of the transmitter 105. The content type indicator serves as a shared type value indicator for identifying the type of content that is included in the content stream being transmitted by the transmitter 105. The content type indicator may be sent out of band from the content stream to be transmitted to the downstream devices. The content type indicator can indicate that the digital content comprises a first type of content (regardless of whether the digital content actually comprises that type of content, a second type of content, or other type of content) responsive to the receiver 115, the repeater 110, and any other downstream devices being compliant with the version of the content protection protocol indicated in stage 305. For example, in implementations of HDCP on DP, the content type indicator can be configured to indicate that the digital content comprises premium content regardless of whether the digital content actually comprises premium content responsive to the receiver 115, the repeater 110, and any other downstream devices being compliant with the version of the content protection protocol indicated in stage 305.

The content processing unit 270 can be configured to override any content type indicators provided by the upstream content control unit 275 where all of the downstream devices are compliant with the particular version of the content protection protocol indicated in stage 305. All content, whether content of the first content type, a second content type, or of another content type is treated as content of the first content type, and thus, all of the content is provided the protections afforded to the first content type under the content protection protocol. For example in HDCP on DP, all content, whether premium content or non-premium content can be treated as premium content, and thus, all of the content is provided the protections afforded to premium content under the content protection protocol.

The transmitter 105 can use the same initialization vector (IV) value when encrypting all of the content included in the content stream. The downstream devices, such as the repeater 110 and the receiver 115, do not need to update the IV value used to decrypt the encrypted content based on changes to the content type propagated to the downstream devices by the transmitter 105. Keeping the content type static once the initial content type indicator is sent to the downstream devices can help avoid link integrity failures due to subsequent content type indicators not reaching the downstream devices in a timely manner. In the HDCP on DP examples illustrated herein, two content types are possible: non-premium content and premium content. However, the techniques disclosed herein are not limited to two content types and may include more than two types of content. Furthermore, the techniques disclosed herein are not limited to these two specific content types. Other implementations can utilize other content types depending upon the content protection protocol or protocols implemented by the transmitter, receiver, and optional repeaters that may are utilized in a particular implementation. The transmitter 105 can be configured to select a particular content type that requires a highest level of protection and can send a content type indicator to downstream devices that indicates that the content stream consists of content of only this type of content.

The digital content can be transmitted to the receiver (stage 315). The content processing unit 270 of the transmitter 105 can be configured to begin transmitting the digital content received from the upstream content control unit 275 to the downstream devices via the media interface 225. The content processing unit 270 can be configured to continue sending the digital content until the content stream has been completely transmitted, until the upstream content control unit 275 signals to the content processing unit 270 to stop sending content, or until a link integrity error occurs. The content processing unit 270 can be configured to reauthenticate the downstream device(s) responsive to a link integrity error occurring and can be configured to continue transmission of the digital content to the downstream device(s) once reauthentication has been completed.

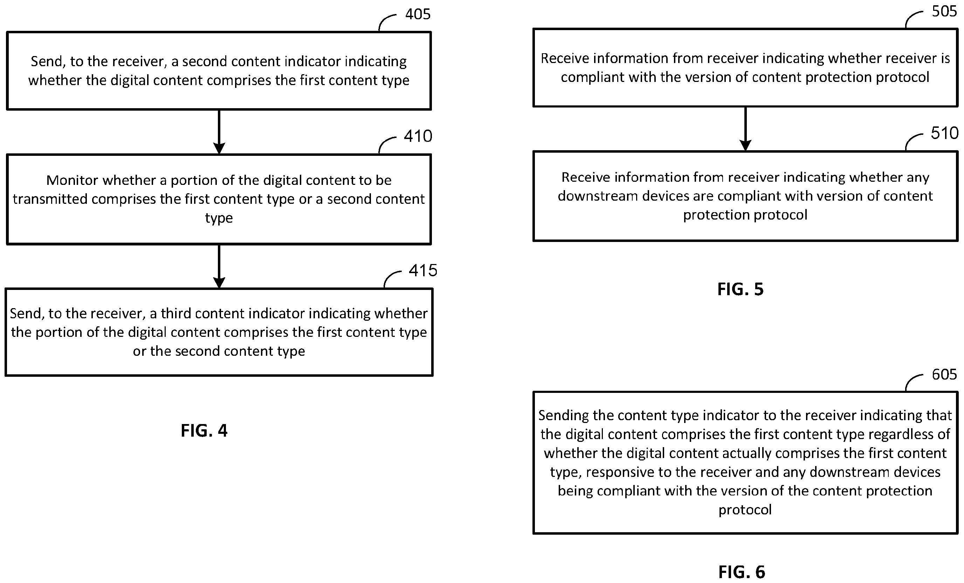

**FIG. 4** is a flow chart of an example process for operating a transmitter according to the techniques disclosed herein. The process illustrated in **FIG. 4** can provide additional stages to the process illustrated in **FIG. 3****.** The process illustrated in **FIG. 4** can be implemented by the transmitter 105 illustrated in **FIG. 1****.** The content processing unit 270 of the transmitter 105 can provide the means for implementing the various stages of the process illustrated in **FIG. 4** unless otherwise specified. The process illustrated in **FIG. 4** can be used to replace stage 310 of the process illustrated in **FIG. 3** responsive to at least one receiver or at least one repeater downstream from the transmitter 105 not being compliant with a particular version of the content protection protocol, such as that indicated in stage 305. For example, where the transmitter and the downstream devices are configured to implement HDCP on DP, the transmitter 105 can be configured to determine whether one or more of the receivers are HDCP 1.x compliant receivers or whether one or more of the repeaters are HDCP 2.0 compliant repeaters. The transmitter 105 cannot transmit premium content to downstream devices supporting HDCP. The transmitter 105 can be configured to determine whether any of the downstream devices are not compliant with a particular version of the content protection protocol based on the information received from the downstream devices in stage 305 of the process illustrated in **FIG. 3****.** If one or more downstream device is non-compliant with the version of the content protection protocol indicated in stage 305, the content processing unit 270 of the transmitter 105 can be configured to execute the process illustrated in **FIG. 4****.**

A second content type indicator can be sent to the receiver (stage 405). The second content type indicator can include information indicating whether content being transmitted or about to be transmitted by the transmitter comprises content of a first content type, a second content type, or another content type where more than two content types are supported. Since at least one downstream device cannot receive content of the first content type, the content processing unit 270 of the transmitter can be configured to send a content type indicator to the downstream devices that represents the actual type of content that the content stream includes. For example, in HDCP on DP implementations where one or more of the downstream devices cannot support the version of HDCP required to transmit premium content, the content processing unit 270 of the transmitter can be configured to send a content type indicator to the downstream devices that represents the actual type of content that the content stream includes (e.g. non-premium content or premium content). The upstream content control unit 275 can be configured to provide the content type to the transmitter 105 of the content to be transmitted to the downstream devices. The content processing until 270 can be configured to propagate this information to the downstream devices.

In some implementations, the upstream content control unit 275 can be configured to instruct the content processing until 270 of the transmitter 105 to cease transmission of the protected content stream responsive to the protected content stream comprising content of the first content type and responsive to determining that one or more downstream devices are not compliant with the version of the content protection protocol required for content of the first content type. In other implementations, the transmitter 105 can be configured to transmit the digital content stream to the downstream devices, but a repeater receiving the downstream content may be configured to prevent the retransmission of the protected digital content to any downstream devices that are not compliant with the version of the content protection protocol. The content processing unit 270 of the transmitter can also be configured to prevent the transmission of some types of content to a non-compliant receiver or repeater that is downstream from the transmitter 105 by switching off the output of any of the media ports of the media interface 225 to which non-compliant devices are communicatively coupled to the transmitter 105.

A portion of the digital content to be transmitted can be monitored to determine whether the digital content comprises a first content type or a second content type (stage 410). The content processing until 270 of the transmitter 105 can continue to monitor the type of content provided by the upstream content control unit 275 to determine whether the type of content has changed. For example, the type of content being provided by the upstream content control unit 275 included in a stream may change from the first content type to the second content type or vice versa. In implementations of HDCP on DP, the type of content being provided by the upstream content control unit 275 may change from premium content to non-premium content or vice versa. Other content types can also be utilized in other implementations.

A third content type indicator can be sent to the receiver (stage 415). The third content type indicator can include information indicating whether content being transmitted or about to be transmitted by the transmitter comprises content of a first content type, a second content type, or another content type where more than two content types are supported. The third content type indicator can be sent to the downstream devices by the content processing unit 270 of the transmitter responsive to the content processing until 270 detecting that a change in content type has occurred. In implementations that utilize HDCP on DP, the third content type indicator can indicate whether the portion of the digital content comprises premium or non-premium content The content processing unit 270 can be configured to propagate the content type indicator to the downstream devices via the network interface 205 or via the media interface 225. Stage 410 and 415 can be repeated until transmission of the content stream has been completed, upstream content control unit 275 stops the transmission of the content stream, or until another event triggers the end of the transmission.

**FIG. 5** is a flow chart of an example process for operating a transmitter according to the techniques disclosed herein. The process illustrated in **FIG. 5** can be used to provide additional stages to the process illustrated in **FIG. 3****.** The process illustrated in **FIG. 5** can be implemented by the transmitter 105 illustrated in **FIG. 1****.** The content processing unit 270 of the transmitter 105 can provide the means for implementing the various stages of the process illustrated in **FIG. 5** unless otherwise specified. The process illustrated in **FIG. 5** can be implemented during the authentication process in which the transmitter 105 and any downstream devices, such as the repeater 110 and the transmitter 105 are authenticated.

Information can be received from the receiver that indicates whether the receiver is compliant with the version of the content protection protocol (stage 505). The version of the content protection protocol can be that indicated in stage 305 of the process of **FIG. 3****.** Any receivers connected to the transmitter 105 without a repeater 110 disposed between the transmitter 105 and the receiver 115 can send device information to the transmitter 105 that indicates which versions of the content protection protocol are supported by the receiver 115. The device information can be received by the transmitter 105 via the media interface 225 or the network interface 205 of the transmitter. The content processing unit 270 of the transmitter can use this information to make a determination whether content of a particular type can be transmitted to the receiver 115.

Information can be received from the receiver that indicates whether any downstream devices are compliant with the version of the content protection protocol (stage 510). The downstream receiver can be a repeater that is configured to serve as both a transmitter and a receiver, such as the repeater 110. The repeater 110 can be configured to collect device information from each of the downstream device that are connected to the repeater 110. A downstream device connected to the repeater 110 may be another repeater or may be receiver. The device information collected by the receiver can indicate which version or versions of the content protection protocol the downstream device is configured to support. The repeater 110 can send this device information to the next upstream device which may be the transmitter 105 or could be another repeater until the device information received by the transmitter 105. The device information can be received by the transmitter 105 via the media interface 225 or via the network interface 205 of the transmitter 105. The content processing unit 270 of the transmitter can use this information to make a determination whether content of a particular type can be transmitted to each of the downstream devices.

**FIG. 6** is a flow chart of an example process for operating a transmitter according to the techniques disclosed herein. The process illustrated in **FIG. 6** can be used to provide additional stages to the process illustrated in **FIG. 3****.** The process illustrated in **FIG. 6** can be implemented by the transmitter 105 illustrated in **FIG. 1**. The content processing unit 270 of the transmitter 105 can provide the means for implementing the various stages of the process illustrated in **FIG. 6** unless otherwise specified.

The content type indicator can be sent to the receiver indicating that the digital content comprises the first content type regardless of whether the digital content actually comprises the first content type, responsive to the receiver any downstream devices being compliant with the version of the content protection protocol (stage 605). Where the topology includes one or more repeaters and/or multiple receivers, the content processing unit 270 of the transmitter 105 can receive information from each of the downstream devices via the media interface 225 that is indicative of the version of the content protection protocol supported by each of these devices is that indicated in stage 305 of the process of **FIG. 3****.** Where all of the device support the version of the content protection protocol, the content processing unit 270 can be configured to treat all content as the first content type as discussed above with respect to stage 310 of **FIG. 3** regardless of the content type that is indicated by the upstream content control unit 275. However, if at least one downstream device does not support the version of the content protection protocol, then the content processing unit 270 of the transmitter 105 can be configured to operate using the process illustrated in **FIG. 4****.**

Computer programs (also known as programs, software, software applications or code) include machine instructions for a programmable processor, and may be implemented in a highlevel procedural and/or object-oriented programming language, and/or in assembly/machine language. As used herein, the terms "processor-readable medium" and "machine-readable medium" refer to any non-transitory computer program product, apparatus and/or device (e.g., magnetic discs, optical disks, memory, Programmable Logic Devices (PLDs)) used to provide machine instructions and/or data to a programmable processor, including a non-transitory machine-readable medium that receives machine instructions as a machine-readable signal.

Memory may be implemented within the computing-based device or external to the device. As used herein the term "memory" refers to any type of long term, short term, volatile, nonvolatile, or other memory and is not to be limited to any particular type of memory or number of memories, or type of media upon which memory is stored.

If implemented in-part by hardware or firmware along with software, the functions may be stored as one or more instructions or code on a computer-readable medium. Examples include computer-readable media encoded with a data structure and computer-readable media encoded with a computer program. Computer-readable media includes physical computer storage media. A storage medium may be any available medium that can be accessed by a computer. By way of example, and not limitation, such computer-readable media can comprise RAM, ROM, EEPROM, CD-ROM or other optical disk storage, magnetic disk storage, semiconductor storage, or other storage devices, or any other medium that can be used to store desired program code in the form of instructions or data structures and that can be accessed by a computer; disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media.

Unless defined otherwise, all technical and scientific terms used herein have the same meaning as commonly or conventionally understood. As used herein, the articles "a" and "an" refer to one or to more than one (i.e., to at least one) of the grammatical object of the article. By way of example, "an element" means one element or more than one element. "About" and/or "approximately" as used herein when referring to a measurable value such as an amount, a temporal duration, and the like, encompasses variations of ±20% or ±10%, ±5%, or +0.1% from the specified value, as such variations are appropriate in the context of the systems, devices, circuits, methods, and other implementations described herein. "Substantially" as used herein when referring to a measurable value such as an amount, a temporal duration, a physical attribute (such as frequency), and the like, also encompasses variations of ±20% or ±10%, ±5%, or +0.1% from the specified value, as such variations are appropriate in the context of the systems, devices, circuits, methods, and other implementations described herein.

As used herein, including in the claims, "or" as used in a list of items prefaced by "at least one of' or "one or more of' indicates a disjunctive list such that, for example, a list of "at least one of A, B, or C" means A or B or C or AB or AC or BC or ABC (i.e., A and B and C), or combinations with more than one feature (e.g., AA, AAB, ABBC, etc.). Also, as used herein, unless otherwise stated, a statement that a function or operation is "based on" an item or condition means that the function or operation is based on the stated item or condition and may be based on one or more items and/or conditions in addition to the stated item or condition.

As used herein, a mobile device or station (MS) refers to a device such as a cellular or other wireless communication device, a smartphone, tablet, personal communication system (PCS) device, personal navigation device (PND), Personal Information Manager (PIM), Personal Digital Assistant (PDA), laptop or other suitable mobile device which is capable of receiving wireless communication and/or navigation signals, such as navigation positioning signals. The term "mobile station" (or "mobile device" or "wireless device") is also intended to include devices which communicate with a personal navigation device (PND), such as by short-range wireless, infrared, wireline connection, or other connection - regardless of whether satellite signal reception, assistance data reception, and/or position-related processing occurs at the device or at the PND Also, "mobile station" is intended to include all devices, including wireless communication devices, computers, laptops, tablet devices, etc., which are capable of communication with a server, such as via the Internet, WiFi, or other network, and to communicate with one or more types of nodes, regardless of whether satellite signal reception, assistance data reception, and/or position-related processing occurs at the device, at a server, or at another device or node associated with the network. Any operable combination of the above are also considered a "mobile station." A mobile device may also be referred to as a mobile terminal, a terminal, a user equipment (UE), a device, a Secure User Plane Location Enabled Terminal (SET), a target device, a target, or by some other name.

While some of the techniques, processes, and/or implementations presented herein may comply with all or part of one or more standards, such techniques, processes, and/or implementations may not, in some embodiments, comply with part or all of such one or more standards.

## Claims

1. A method for transmitting protected digital content from a transmitter to a receiver (115) wherein the receiver is a repeater, the method comprising:
determining (305) whether the receiver and any devices downstream of the transmitter are compliant with a version of a content protection protocol;
in response to the receiver and any downstream devices being compliant with the version of the content protection protocol, providing, to the digital content, protection afforded to a first content type under the version of the content protection protocol when the digital content comprises the first content type or a second content type that is different to the first content type;
sending (310), to the receiver, a content type indicator indicating that the digital content comprises the first content type; and
transmitting (315) the digital content to the receiver.

2. The method of claim 1, wherein the first content type can only be transmitted to the receiver that is compliant with the version of the content protection protocol.

3. The method of claim 1, wherein the content protection protocol is a High-bandwidth Digital Content Protection, HDCP, and the version comprises a version 2.2 of the HDCP protocol or higher.

4. The method of claim 1, wherein upon a determination that the receiver is non-compliant with the version of the content protection protocol, the method further comprising:
sending (405), to the receiver, a second content type indicator indicating whether the digital content comprises the first content type;
monitoring (410) whether a portion of the digital content to be transmitted comprises the first content type or the second content type; and
sending (415), to the receiver, a third content type indicator indicating whether the portion of the digital content comprises the first content type or the second content type.

5. The method of claim 4 , wherein the determining whether the receiver is compliant with the version of the content protection protocol comprises:
receiving (510) information from the receiver indicating whether the receiver and any downstream devices from the receiver are compliant with the version of the content protection protocol.

6. The method of claim 1, wherein the receiver and any downstream devices are compliant with the version of the content protection protocol, and wherein sending the content type indicator comprises sending the content type indicator to the receiver indicating that the digital content comprises the first content type regardless of whether the digital content actually comprises the first content type.

7. The method of claim 1, wherein the digital content is non-premium content and the content type indicator indicates the digital content is premium content.

8. A transmitter comprising:
means for determining whether a receiver and any devices downstream of the transmitter are compliant with a version of a content protection protocol;
means for providing, to digital content, in response to the receiver and any downstream devices being compliant with the version of the content protection protocol, protection afforded to a first content type under the version of the content protection protocol when the digital content comprises the first content type or a second content type that is different to the first content type;
means for sending, to the receiver, a content type indicator indicating that the digital content comprises the first content type; and
means for transmitting the digital content to the receiver, wherein the receiver is a repeater

9. The transmitter of claim 8,
wherein the first content type can only be transmitted to the receiver that is compliant with the version of the content protection protocol.

10. The transmitter of claim 8,
wherein the content protection protocol is a High-bandwidth Digital Content Protection, HDCP, and the version comprises a version 2.2 of the HDCP protocol or higher.

11. The transmitter of claim 8,
wherein the receiver is non-compliant with the version of the content protection protocol, and wherein the transmitter further comprises:
means for sending a second content type indicator indicating whether the digital content comprises the first content type;
means for monitoring whether a portion of the digital content to be transmitted comprises the first content type or the second content type; and
means for sending, to the receiver, a third content type indicator indicating whether the portion of the digital content comprises the first content type or the second content type.

12. The transmitter of claim 11 , wherein the means for determining whether the receiver is compliant with the version of the content protection protocol further comprises:
means for receiving information from the receiver indicating whether the receiver and any downstream devices from the receiver are compliant with the version of the content protection protocol.

13. A non-transitory, computer-readable medium, having stored thereon computer-readable instructions operating for operating a transmitter, comprising instructions configured to cause the transmitter to perform a method in accordance with any of claims 1 to 7.

## Patentansprüche

1. Ein Verfahren zum Senden von geschütztem digitalem Inhalt von einem Sender an einen Empfänger (115), wobei der Empfänger ein Repeater ist, wobei das Verfahren Folgendes aufweist:
Bestimmen (305), ob der Empfänger und jegliche Einrichtungen, die dem Sender nachgelagert sind, mit einer Version eines Inhaltsschutzprotokolls kompatibel sind;
ansprechend darauf, dass der Empfänger und jegliche nachgelagerten Einrichtungen mit der Version des Inhaltsschutzprotokolls kompatibel sind, Versehen des digitalen Inhalts mit einem Schutz, der einem ersten Inhaltstyp unter der Version des Inhaltsschutzprotokolls geboten wird, wenn der digitale Inhalt den ersten Inhaltstyp aufweist oder einen zweiten Inhaltstyp, der sich von dem ersten Inhaltstyp unterscheidet;
Senden (310), an den Empfänger, eines Inhaltstypindikators, der anzeigt, dass der digitale Inhalt den ersten Inhaltstyp aufweist; und
Senden (315) des digitalen Inhalts an den Empfänger.

2. Verfahren nach Anspruch 1, wobei der erste Inhaltstyp nur an den Empfänger gesendet werden kann, der mit der Version des Inhaltsschutzprotokolls kompatibel ist.

3. Verfahren nach Anspruch 1, wobei das Inhaltsschutzprotokoll ein HDCP (HDCP = High-bandwidth Digital Content Protection bzw. Schutz von digitalem Inhalt mit hoher Bandbreite) ist und die Version eine Version 2.2 des HDCP-Protokolls oder höher aufweist.

4. Verfahren nach Anspruch 1, wobei auf eine Bestimmung hin, dass der Empfänger nicht mit der Version des Inhaltsschutzprotokolls kompatibel ist, das Verfahren weiter Folgendes aufweist:
Senden (405), an den Empfänger, eines zweiten Inhaltstypindikators, der anzeigt, ob der digitale Inhalt den ersten Inhaltstyp aufweist;
Überwachen (110), ob ein Teil des digitalen Inhalts, der gesendet werden soll, den ersten Inhaltstyp oder den zweiten Inhaltstyp aufweist; und
Senden (415), an den Empfänger, eines dritten Inhaltstypindikators, der anzeigt, ob der Teil des digitalen Inhalts den ersten Inhaltstyp oder den zweiten Inhaltstyp aufweist.

5. Verfahren nach Anspruch 4, wobei das Bestimmen, ob der Empfänger mit der Version des Inhaltsschutzprotokolls kompatibel ist, Folgendes aufweist:
Empfangen (510) von Information von dem Empfänger, die anzeigt, ob der Empfänger und jegliche nachgelagerten Einrichtungen von dem Empfänger mit der Version des Inhaltsschutzprotokolls kompatibel sind.

6. Verfahren nach Anspruch 1, wobei der Empfänger und jegliche nachgelagerten Einrichtungen mit der Version des Inhaltsschutzprotokolls kompatibel sind, und wobei das Senden des Inhaltstypindikators Senden des Inhaltstypindikators an den Empfänger aufweist, der anzeigt, dass der digitale Inhalt den ersten Inhaltstyp anzeigt, unabhängig davon, ob der digitale Inhalt tatsächlich den ersten Inhaltstyp aufweist.

7. Verfahren nach Anspruch 1, wobei der digitale Inhalt Nicht-Premium-Inhalt ist und der Inhaltstypindikator anzeigt, dass der digitale Inhalt Premium-Inhalt ist.

8. Ein Sender, der Folgendes aufweist:
Mittel zum Bestimmen, ob ein Empfänger und jegliche Einrichtungen, die dem Sender nachgelagert sind, mit einer Version eines Inhaltsschutzprotokolls kompatibel sind;
Mittel zum Versehen des digitalen Inhalts, ansprechend darauf, dass der Empfänger und jegliche nachgelagerten Einrichtungen mit der Version des Inhaltsschutzprotokolls kompatibel sind, mit einem Schutze, der einem ersten Inhaltstyp unter der Version des Inhaltsschutzprotokolls geboten wird, wenn der digitale Inhalt den ersten Inhaltstyp aufweist oder einen zweiten Inhaltstyp, der sich von dem ersten Inhaltstyp unterscheidet;
Mittel zum Senden, an den Empfänger, eines Inhaltstypindikators, der anzeigt, dass der digitale Inhalt den ersten Inhaltstyp aufweist; und
Mittel zum Senden des digitalen Inhalts an den Empfänger, wobei der Empfänger ein Repeater ist.

9. Sender nach Anspruch 8, wobei der erste Inhaltstyp nur an den Empfänger gesendet werden kann, der mit der Version des Inhaltsschutzprotokolls kompatibel ist.

10. Sender nach Anspruch 8, wobei das Inhaltsschutzprotokoll ein HDCP (HDCP
= High-bandwidth Digital Content Protection bzw. Schutz von digitalem Inhalt mit hoher Bandbreite) ist und die Version eine Version 2.2 des HDCP-Protokolls oder höher aufweist.

11. Sender nach Anspruch 8, wobei der Empfänger nicht mit der Version des Inhaltsschutzprotokolls kompatibel ist, und wobei der Sender weiter Folgendes aufweist:
Mittel zum Senden eines zweiten Inhaltstypindikators, der anzeigt, ob der digitale Inhalt den ersten Inhaltstyp aufweist;
Mittel zum Überwachen, ob ein Teil des digitalen Inhalts, der gesendet werden soll, den ersten Inhaltstyp oder den zweiten Inhaltstyp aufweist; und
Mittel zum Senden, an den Empfänger, eines dritten Inhaltstypindikators, der anzeigt, ob der Teil des digitalen Inhalts den ersten Inhaltstyp oder den zweiten Inhaltstyp aufweist.

12. Sender nach Anspruch 11, wobei die Mittel zum Bestimmen, ob der Empfänger mit der Version des Inhaltsschutzprotokolls kompatibel ist, weiter Folgendes aufweisen:
Mittel zum Empfangen von Information von dem Empfänger, die anzeigt, ob der Empfänger und jegliche nachgelagerten Einrichtungen von dem Empfänger mit der Version des Inhaltsschutzprotokolls kompatibel sind.

13. Ein nicht transitorisches computerlesbares Medium mit darauf gespeicherten computerlesbaren Instruktionen zum Betreiben eines Senders, die Instruktionen aufweisen, die konfiguriert sind den Sender zu veranlassen zum Durchführen eines Verfahrens nach einem der Ansprüche 1 bis 7.

## Revendications

1. Procédé d'émission d'un contenu numérique protégé d'un émetteur vers un récepteur (115), le récepteur étant un répéteur, le procédé comprenant les étapes consistant à :
déterminer (305) si le récepteur et des dispositifs quelconques en aval de l'émetteur sont conformes à une version d'un protocole de protection de contenu ;
en réponse au fait que le récepteur et que des dispositifs quelconques en aval sont conformes à la version du protocole de protection de contenu, fournir, au contenu numérique, une protection accordée à un premier type de contenu d'après la version du protocole de protection de contenu quand le contenu numérique comprend le premier type de contenu ou un second type de contenu qui est différent du premier type de contenu ;
envoyer (310), au récepteur, un indicateur de type de contenu indiquant que le contenu numérique comprend le premier type de contenu ; et
émettre (315) le contenu numérique vers le récepteur.

2. Procédé selon la revendication 1, dans lequel le premier type de contenu peut uniquement être émis vers le récepteur qui est conforme à la version du protocole de protection de contenu.

3. Procédé selon la revendication 1, dans lequel le protocole de protection de contenu est une protection des contenus numériques en haute définition, HDCP, et la version comprend une version 2.2 du protocole HDCP ou une version supérieure.

4. Procédé selon la revendication 1, le procédé comprenant en outre, au moment où il est déterminé que le récepteur n'est pas conforme à la version du protocole de protection de contenu, les étapes consistant à :
envoyer (405), au récepteur, un deuxième indicateur de type de contenu indiquant si le contenu numérique comprend le premier type de contenu ;
surveiller (410) si une partie du contenu numérique à émettre comprend le premier type de contenu ou le second type de contenu ; et
envoyer (415), au récepteur, un troisième indicateur de type de contenu indiquant si la partie du contenu numérique comprend le premier type de contenu ou le second type de contenu.

5. Procédé selon la revendication 4, dans lequel le fait de déterminer si le récepteur est conforme à la version du protocole de protection de contenu comprend l'étape consistant à :
recevoir (510), en provenance du récepteur, une information indiquant si le récepteur et des dispositifs quelconques en aval du récepteur sont conformes à la version du protocole de protection de contenu.

6. Procédé selon la revendication 1, dans lequel le récepteur et des dispositifs quelconques en aval sont conformes à la version du protocole de protection de contenu et dans lequel l'envoi de l'indicateur de type de contenu comprend l'étape consistant à envoyer au récepteur l'indicateur de type de contenu indiquant que le contenu numérique comprend le premier type de contenu indépendamment du fait de savoir si le contenu numérique comprend effectivement le premier type de contenu.

7. Procédé selon la revendication 1, dans lequel le contenu numérique est un contenu qui n'est pas payant et l'indicateur de type de contenu indique que le contenu numérique est un contenu payant.

8. Émetteur comprenant :
un moyen permettant de déterminer si un récepteur et des dispositifs quelconques en aval de l'émetteur sont conformes à une version d'un protocole de protection de contenu ;
un moyen permettant de fournir, à un contenu numérique, en réponse au fait que le récepteur et que des dispositifs quelconques en aval sont conformes à la version du protocole de protection de contenu, une protection accordée à un premier type de contenu d'après la version du protocole de protection de contenu quand le contenu numérique comprend le premier type de contenu ou un second type de contenu qui est différent du premier type de contenu ;
un moyen permettant d'envoyer, au récepteur, un indicateur de type de contenu indiquant que le contenu numérique comprend le premier type de contenu ; et
un moyen permettant d'émettre le contenu numérique vers le récepteur, le récepteur étant un répéteur.

9. Émetteur selon la revendication 8, dans lequel le premier type de contenu peut uniquement être émis vers le récepteur qui est conforme à la version du protocole de protection de contenu.

10. Émetteur selon la revendication 8, dans lequel le protocole de protection de contenu est une protection des contenus numériques en haute définition, HDCP, et la version comprend une version 2.2 du protocole HDCP ou une version supérieure.

11. Émetteur selon la revendication 8, dans lequel le récepteur n'est pas conforme à la version du protocole de protection de contenu et l'émetteur comprenant en outre :
un moyen permettant d'envoyer un deuxième indicateur de type de contenu indiquant si le contenu numérique comprend le premier type de contenu ;
un moyen permettant de surveiller si une partie du contenu numérique à émettre comprend le premier type de contenu ou le second type de contenu ; et
un moyen permettant d'envoyer, au récepteur, un troisième indicateur de type de contenu indiquant si la partie du contenu numérique comprend le premier type de contenu ou le second type de contenu.

12. Émetteur selon la revendication 11, dans lequel le moyen permettant de déterminer si le récepteur est conforme à la version du protocole de protection de contenu comprend en outre :
un moyen permettant de recevoir, en provenance du récepteur, une information indiquant si le récepteur et des dispositifs quelconques en aval du récepteur sont conformes à la version du protocole de protection de contenu.

13. Support non temporaire et lisible par ordinateur, sur lequel sont stockées des instructions lisibles par ordinateur, fonctionnelles pour faire fonctionner un émetteur, comprenant des instructions configurées pour amener l'émetteur à réaliser un procédé selon l'une quelconque des revendications 1 à 7.
